Europäisches Patentamt

European Patent Office

Office européen des brevets

(11) Publication number: **0 437 904 A1**

## EUROPEAN PATENT APPLICATION

(21) Application number: 90300432.3

(22) Date of filing: 16.01.90

(51) Int. Cl.⁵: **G11B 5/704**, G11B 5/64

(43) Date of publication of application:
24.07.91 Bulletin 91/30

(84) Designated Contracting States:
**DE ES FR GB IT NL**

(71) Applicant: **NIPPON SHEET GLASS CO., LTD.**
5-11, 3-Chome Doshomachi
Chuo-ku Osaka(JP)

(72) Inventor: **Ishii, Norimasa, c/o Nippon Sheet
Glass Co., Ltd.**
5-11, 3-chome, Doshomachi, Chuo-ku
Osaka(JP)
Inventor: **Katayama, Shinya c/o Nippon Sheet
Glass Co., Ltd.**
5-11, 3-chome, Doshomachi, Chuo-ku
Osaka(JP)

(74) Representative: **Jackson, David Spence et al
REDDIE & GROSE 16, Theobalds Road
London, WC1X 8PL(GB)**

(54) **Magnetic recording medium and process for producing the same.**

(57) In a magnetic recording medium (40) and a process of producing the medium (40), an interlayer (44) is formed between a glass substrate (42) and an undercoating film (46) to entrap gas released from the glass substrate (42) so that the undercoating film (46) is not easily oxidized even in an initial film formation stage. Preferably the interlayer (44) is sputtered titanium, the undercoating film (46) is sputtered chromium, the magnetic medium layer (48) is sputtered CoNiCr, and a protective carbon layer (50) is sputtered over the magnetic medium layer (48).

## FIG. 1

# MAGNETIC RECORDING MEDIUM AND PROCESS FOR PRODUCING THE SAME

## BACKGROUND OF THE INVENTION

Field of the Invention:

The present invention relates to a magnetic recording medium in which a magnetic recording film or the like is formed on a glass substrate and a process of producing the same and, more particularly, to a magnetic recording medium in which an interlayer is formed between a glass substrate and an undercoating film to entrap a gas released from the glass substrate so that the undercoating film is not easily oxidized in an initial stage of film formation and a process of producing the same.

Description of the Prior Art:

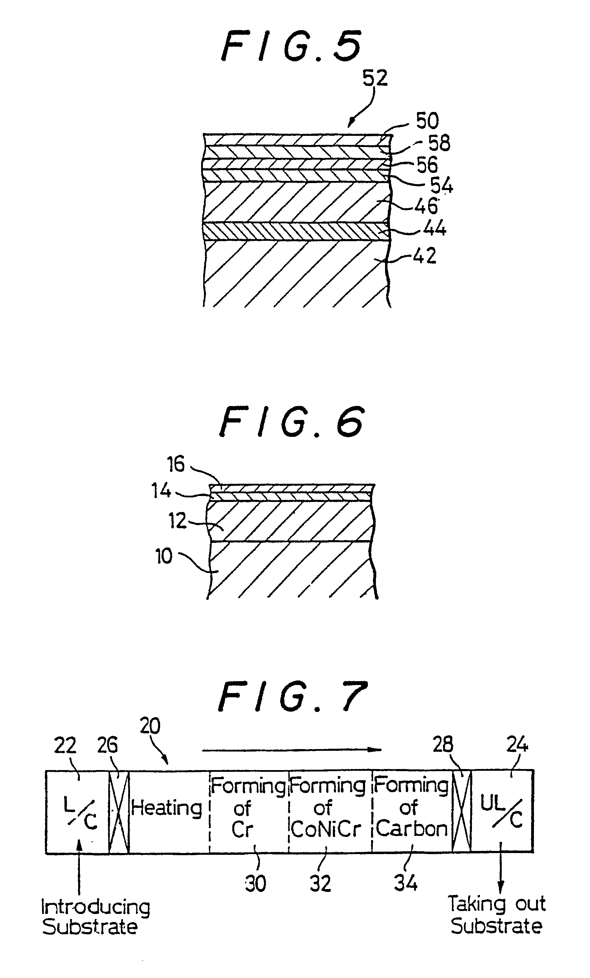

A magnetic recording medium of a magnetic disk apparatus is produced by utilizing various techniques. In recent years, a glass disk in which a thin magnetic film is formed on the surface of a glass substrate by sputtering has been developed. A magnetic recording medium of this type has a structure in which, for example, an undercoating film 12, a recording film 14 consisting of, e.g., CoNiCr or CoNi and a carbon protective film 16 are sequentially laminated on a glass substrate 10, as shown in Fig. 6.

In addition, a magnetic recording medium may have a structure in which a first undercoating film is formed between a substrate and a second undercoating film. A 200 nm thick first undercoating film consisting of Ti, a 10 nm thick second undercoating film consisting of Cr, a 70 nm thick recording film consisting of CoNiCr and a carbon protective film are sequentially laminated on a substrate (refer to, e.g., JP-A-173427/1989).

The magnetic recording medium shown in Fig. 6 can be efficiently produced by an in-line sputtering apparatus as shown in Fig. 7. A loading chamber 22 and an unloading chamber 24 are provided at entrance and exit sides, respectively, of a process chamber 20. In order to maintain a high vacuum state in the process chamber 20, the process chamber 20 is isolated from the loading and unloading chambers 22 and 24 by isolation valves 26 and 28, respectively. A glass substrate is mounted on a conveyor jig called a pallet and moved inside the apparatus along a direction indicated by an arrow shown in Fig. 7. In the process chamber 20, the glass substrate is heated up to a predetermined temperature by a heater, and film formation is sequentially performed on a sputtering stage 30 having a Cr target, a sputtering stage 32 having a CoNiCr target and a sputtering stage 34 having a carbon target. The sputtering stages are arranged in accordance with a layer structure of a magnetic recording medium.

In a magnetic recording medium using a glass substrate as a substrate as described above, however, magnetic characteristics of the magnetic recording medium change in accordance with various parameters of its layer structure. That is, since the magnetic characteristics depend on a layer forming speed of each layer in the layer structure, it is difficult to determine an optimal arrangement of the layer structure.

## OBJECT AND SUMMARY OF THE INVENTION

It is an object of the present invention to provide a magnetic recording medium having good magnetic characteristics and an undercoating film thinner than a conventional undercoating film and a process of producing the same.

In order to achieve the above object, the present invention is a magnetic recording medium in which an undercoating film consisting of Cr, a recording film and a protective film are laminated on a glass substrate, wherein an interlayer having a thickness of 15 to 100 nm is formed between the glass substrate and the undercoating film.

The present invention has been made in consideration of the fact that magnetic characteristics of a magnetic recording medium produced by using a glass substrate are largely influenced by a film arrangement because oxidizing gases such as $H_2O$ and $O_2$ released from the glass substrate during a producing process adversely affect crystallinity of Cr upon formation of an undercoating film consisting of Cr, thereby deteriorating the magnetic characteristics of the magnetic recording medium.

More specifically, when a glass substrate is used as a substrate, a large amount of $H_2O$, $O_2$ and OH groups adhere on the surface of the substrate as compared with other substrate materials such as Al. In addition, the substrate is generally heated upon formation of an undercoating film consisting of Cr in order to improve crystallinity of the Cr undercoating film. That is, the Cr undercoating film is formed immediately after the glass substrate is heated. Upon heating of the glass substrate, the $H_2O$, $O_2$ and OH groups adhering on the glass substrate are partially dissociated from the glass substrate and diffused in the process chamber in a gaseous state, thereby increasing an oxygen partial pressure in an ambient atmospheric gas (Ar gas) upon Cr film formation. As a result, Cr atoms sputtered from a Cr target are oxidized before they reach the surface of the glass substrate or oxidized by oxygen introduced from the ambient atmosphere when they reach the glass substrate.

Furthermore, Cr particles flying onto the glass substrate surface react with and are oxidized by the $H_2O$, $O_2$ and OH groups partially remaining on the glass substrate surface due to a kinetic energy of the Cr particles itself and heat energy produced upon substrate heating.

Oxidization of Cr caused by the reaction mentioned above interferes with crystal growth to a body-centered cubic lattice of metal Cr which is most desired as an undercoating film, largely deteriorates the characteristics of the magnetic recording medium.

A magnetic recording medium of the present invention is produced by forming an interlayer having a thickness of 15 to 100 nm on a glass substrate in order to shut a gas on the border of releasing from the glass substrate, and sequentially forming an undercoating film, a recording film and a protective film on the interlayer.

Examples of the material of the interlayer are metals such as Ti, Mo, w, Zr, Y, Mn and Si, alloy containing base metal consisting of these metals such as Zr alloy containing 13 to 20 atom% Al and oxides and nitrides such as $SiO_2$, $Al_2O_3$, TiN and AlN. Of these materials, Ti is preferred since it has a larger gettering effect than that of Cr often used as a material for an undercoating film.

The interlayer formed on the glass substrate entraps a gas released from the glass substrate. If a metal is used as the material for the interlayer, oxygen is entrapped by the metal. If an oxide or nitride is used, transferring of a gas is interrupted.

If the interlayer is thinner than 15 nm, an effect of preventing a gas from being released from the glass substrate is deteriorated. If the interlayer is thicker than 100 nm, the film thickness is unnecessarily increased to degrade productivity. In addition, it is difficult to heat the substrate with the interlayer up to a comparative high temperature, which is required to obtain a magnetic recording film having good magnetic characteristics in a subsequent magnetic recording film formation step. The thickness of the interlayer is preferably 30 to 50 nm.

The interlayer causes the Cr undercoating film to be hardly oxidized in the process, so that characteristics required for a magnetic recording medium are improved. In addition, since the undercoating film is almost not oxidized in an initial film formation stage, Cr metal with crystals of body-centered cubic lattice which is preferred as the Cr undercoating film is formed from the initial to the final film formation stage. As a result, a good Cr undercoating film having a thin film thickness can be obtained.

In particular, when the interlayer has been formed before the glass substrate is heated, the interlayer can prevent the gases such as $H_2O$ and $O_2$ from diffusing into an ambient atmosphere upon glass substrate heating for a subsequent film formation. Therefore, the degree of vacuum in the process chamber is not reduced. As a result, Cr particles for the undercoating film sputtered from the target can be protected from being oxidized before they reach the surface of the substrate, and the Cr undercoating film formed on the substrate surface can be protected from being oxidized.

BRIEF DESCRIPTION OF THE DRAWINGS

Fig. 1 is an enlarged sectional view showing an embodiment of a magnetic recording medium according to the present invention;

Fig. 2 is a view for explaining an in-line sputtering apparatus used to produce the magnetic recording medium shown in Fig. 1;

Fig. 3 is a graph showing a change in degree of vacuum during and after substrate heating obtained by using the sputtering apparatus shown in Fig. 2;

Fig. 4 is a view showing another sputtering apparatus usable in the present invention;

Fig. 5 is an enlarged sectional view showing another embodiment of the magnetic recording medium according to the present invention;

Fig. 6 is an enlarged sectional view showing a conventional magnetic recording medium;

Fig. 7 is a view for explaining an in-lie sputtering apparatus used to produce the conventional magnetic recording medium shown in Fig. 6;

Fig. 8 is a graph showing a relationship between the film thickness of a Ti interlayer formed on a glass substrate and an amount of a gas released from the glass substrate upon heating;

Fig. 9 is a graph showing a relationship between the film thickness of a Ti interlayer formed on a glass substrate and a coercive force of a magnetic recording medium with a 120 nm thick Cr undercoating film and a 60 nm thick CoNiCr magnetic recording film sequentially formed on the Ti interlayer;

Fig. 10 is a graph showing a relationship between a coercive force of a magnetic recording medium and a film thickness of a Cr undercoating film formed on a Ti interlayer; and

Figs. 11A and 11B are graphs showing a relationship of absorptivity, reflectivity and transmittance with respect to the film thickness of a Ti interlayer obtained when infrared rays are radiated onto a glass substrate having the Ti interlayer.

DETAILED DESCRIPTION OF THE PREFERRED EMBODIMENTS

Preferred embodiments of the present invention will be described in detail with reference to the accompanying drawings.

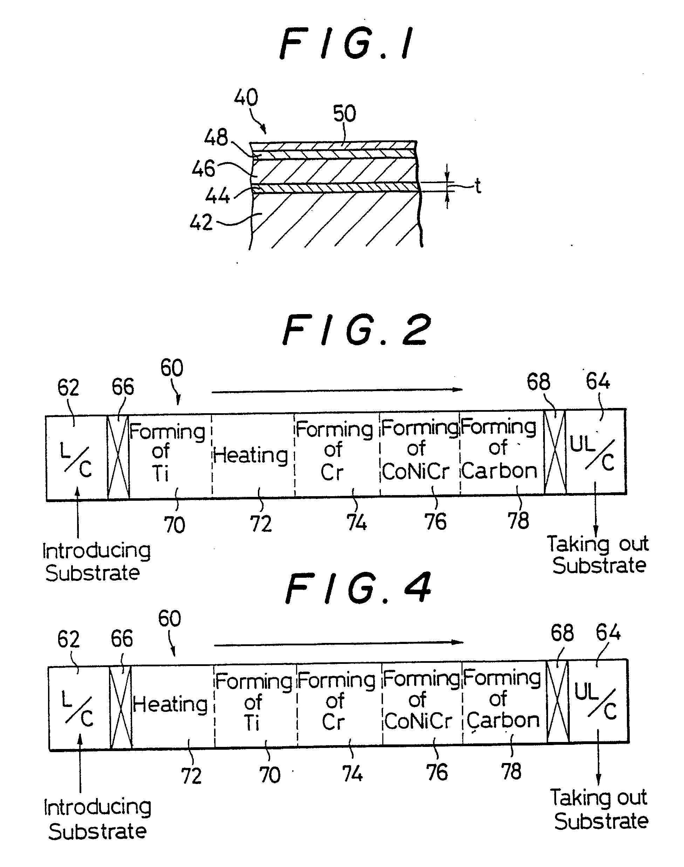

Fig. 1 is an enlarged sectional view showing an embodiment of a magnetic recording medium according to the present invention. A magnetic recording medium 40 has a structure in which a Ti interlayer 44 having a film thickness t is formed on a glass substrate 42, and a Cr undercoating film 46, a CoNiCr recording film 48 and a carbon protective film 50 are sequentially formed on the Ti interlayer 44.

The present invention is characterized in that the interlayer 44 having a film thickness t of 15 to 100 nm and capable of entrapping a gas released from the glass substrate 42 is formed between the glass substrate 42 and the undercoating film 46.

The magnetic recording medium 40 is produced by using an in-line sputtering apparatus shown in Fig. 2. This sputtering apparatus basically has the same arrangement as a conventional apparatus. That is, glass disk substrate loading and unloading chambers 62 and 64 are provided at entrance and exit sides, respectively, of a process chamber 60, and isolation valves 66 and 68 are provided between the process chamber 60 and the loading and unloading chambers 62 and 64, respectively. In the process chamber 60, a first sputtering stage 70 having a Ti target, a heating section 72 having a heater for heating a glass substrate, a second sputtering stage 74 having a Cr target, a third sputtering stage 76 having a CoNiCr target and a fourth sputtering stage 78 having a carbon target are sequentially arranged from loading to unloading sides.

A glass substrate is conveyed in a direction indicated by an arrow shown in Fig. 2. A Ti interlayer is formed at room temperature in the first sputtering stage 70, and the substrate is heated up to a predetermined substrate temperature in the heating section 72. Thereafter, a Cr film is formed in the second sputtering stage 74, CoNiCr and carbon films are sequentially formed in the respective stages 76 and 78, and then the substrate is unloaded.

A coercive force, residual magnetization and a squareness ratio of a magnetic hysteresis loop were measured as static magnetic characteristics of Examples A and B of the magnetic recording medium 40 formed by the above producing process. The measurement results of the Examples A and B are summarized in Tables 1 and 2, respectively. In the following Tables, reference symbol $\perp$ represents a measurement value obtained when a magnetic field is applied perpendicular to a disk conveyance direction during film formation, and reference symbol $\parallel$ represents a measurement value obtained when a magnetic field is applied parallel to the disk conveyance direction during film formation.

The Examples were made under the following conditions:

Substrate heating temperature...320° C

Substrate conveyance speed...150 mm/min.

Cr target input power...0.04 $W/cm^2/nm$

CoNiCr target input power...0.025 $W/cm^2/nm$

Carbon target input power...0.16 $W/cm^2/nm$

Ti target input power...0.03 $W/cm^2/nm$

Maximum degree of vacuum ...5.0 x $10^{-7}$ Torr or less

Sputtering Ar gas pressure...10 mTorr

Table 1 shows the results obtained from the Example A having a 35 nm thick Ti interlayer in comparison with a conventional product A' not having a Ti interlayer as shown in Fig. 6. The other film thicknesses and arrangements are the same.

Table 2 shows the results obtained when the thickness of the Cr undercoating layer was changed. That is, the Examples B has a 35 nm thick Ti interlayer 44 and a Cr undercoating film 46 thinner than that of the Example A. The thickness of the Cr undercoating film 46 is about half that of a Cr undercoating film 12 of a conventional product B'.

Table 1

| | Coercive Force (Oe) | Residual Magnetization (Gμm) | Squareness Ratio | Film Thickness (Carbon 38 nm constant) | | |
|---|---|---|---|---|---|---|
| Conventional Product A' (Without Ti Layer) | 1030 (⊥) 1010 (∥) | 420 (⊥) 428 (∥) | 0.78 (⊥) 0.84 (∥) | CoNiCr 60 nm | Cr 120 nm | — |
| Example A (With Ti Layer) | 1220 (⊥) 1200 (∥) | 430 (⊥) 428 (∥) | 0.85 (⊥) 0.84 (∥) | CoNiCr 60 nm | Cr 120 nm | Ti 35 nm |

Table 2

| | Coercive Force (Oe) | Residual Magnetization (Gμm) | Squareness Ratio | Film Thickness (Carbon 38 nm constant) | | |
|---|---|---|---|---|---|---|
| Conventional Product B' (Without Ti Layer) | 1310 (⊥) 1290 (∥) | 430 (⊥) 435 (∥) | 0.77 (⊥) 0.83 (∥) | CoNiCr 60 nm | Cr 240 nm | — |
| Example B (With Ti Layer) | 1330 (⊥) 1310 (∥) | 420 (⊥) 437 (∥) | 0.84 (⊥) 0.84 (∥) | CoNiCr 60 nm | Cr 150 nm | Ti 35 nm |

As is apparent from Table 1, when the Cr film thickness is the same, the Example A having the Ti interlayer has a higher coercive force than that of the conventional product A'.

In addition, as is apparent from Table 2, the Example B has substantially the same static magnetic characteristics as the conventional product B' although the thickness of its Cr film is about half that of the conventional product B'.

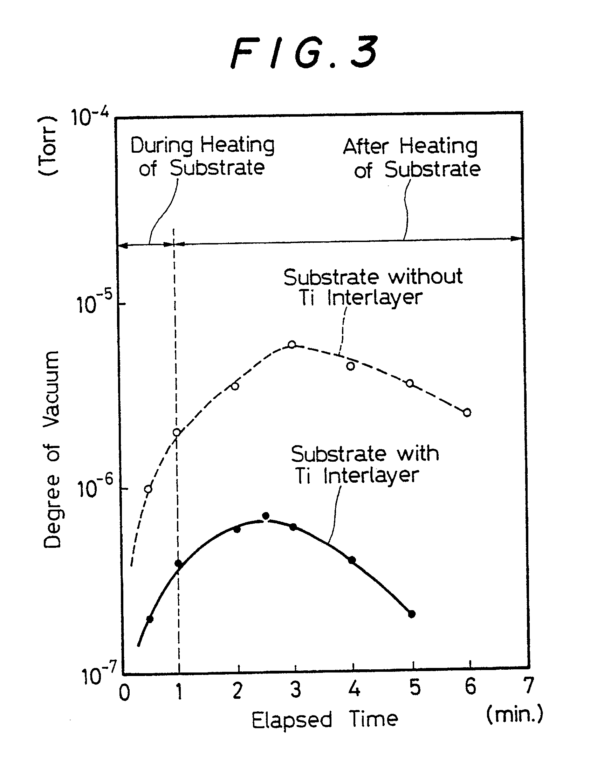

A process of forming the above Examples A and B is preferred, in which a Ti film is formed on a glass substrate and then the substrate is heated to form the respective films, since the degree of vacuum in the process chamber can be maintained at a high level during and after the substrate heating. This is shown in Fig. 3, which is derived from plotting a change in degree of vacuum with respect to an elapsed time during and after the substrate heating. The change in degree of vacuum as shown in Fig. 3 corresponds to a change in an amount of gas released from the substrate. By comparing the change in degree of vacuum obtained from the substrate having Ti interlayer with that obtained from the substrate having no Ti interlayer, the former degree of vacuum is lower than the latter by about one place. This means that oxidation of Cr can be prevented in the subsequent sputtering step for formation of Cr undercoating film whereby the magnetic characteristics of the magnetic recording medium can be improved.

The effect of Ti interlayer, however, can be obtained even if the formation step of Ti interlayer and the substrate heating step are replaced in order. In this case, it must prevent oxidizing gases from a heating section 72 flowing into a Ti coating section 70 by some techniques, for example, a pumping of oxidizing gases in a heating section 72 or a installation of small conductance slits between a heating section 72 and a Ti coating section 70 In an in-line sputtering apparatus shown in Fig. 4, a glass substrate loaded in a process chamber 60 is heated by a heating section 72, and a Ti film is formed by a first sputtering stage 70 having a Ti target. Subsequently, Cr, CoNiCr and carbon films are formed to produce the magnetic recording medium 40 having the same structure as shown in Fig. 1. Since the arrangement of Fig. 4 is the same as that shown in Fig. 2 except that the positions of the first sputtering stage 70 having the Ti target and the heating section 72 are replaced, the same reference numerals as in Fig. 2 represent the same parts and a detailed description thereof will be omitted.

Static magnetic characteristics and dynamic characteristics of an Example C obtained by the above procedures are summarized in Tables 3 and 4, respectively. Static and dynamic characteristics of a conventional product C' not having a Ti interlayer are summarized in Tables 3 and 4, respectively, for comparison.

Dynamic characteristics measurement conditions are as follows:

Disk rotational speed...3,600 rpm

Head used...thin film head

Head flying height...0.15 $\mu$m

Items for estimating the dynamic characteristics are defined as follows:

Peak shift...a shift amount of a signal peak in a B6D9 (hexadecimal notation) write pattern

High-frequency output...an average reproduction output in a 5-MHz write signal

Resolution...an average reproduction output ratio (high-frequency output/low-frequency output) upon writing at 1.88 MHz and 5 MHz

Overwrite characteristics...a ratio of a residual low-frequency signal output to a low-frequency output obtained when a signal is written at 1.88 MHz and then a signal is overwritten at 5 MHz

Signal to noise ratio...a ratio of a reproduced output to noise upon signal erasure

Table 3

| | Coercive Force (Oe) | Residual Magnetization (G·µm) | Squareness Ratio | Film Thickness (Carbon 38 nm constant) | | |
|---|---|---|---|---|---|---|
| Conventional Product C' (Without Ti Layer) | 1110 (⊥) 1090 (∥) | 429 (⊥) 436 (∥) | 0.77 (⊥) 0.83 (∥) | CoNiCr 60 nm | Cr 150 nm | — |
| Example A (With Ti Layer) | 1290 (⊥) 1290 (∥) | 439 (⊥) 435 (∥) | 0.84 (⊥) 0.83 (∥) | CoNiCr 60 nm | Cr 150 nm | Ti 35 nm |

Table 4

| | Peak Shift (ns) | High-Frequency Output (µV) | Resolution (%) | Overwrite Characteristics (dB) | Signal to Noise Ratio (dB) |
|---|---|---|---|---|---|
| Conventional Product C' (Without Ti Layer) | 17.8 | 360 | 76.0 | 35.4 | 33.1 |
| Example C (With Ti Layer) | 12.2 | 378 | 83.0 | 32.2 | 34.3 |

As is apparent from Tables 3 and 4, even the magnetic recording medium 40 obtained by performing Ti film formation after the glass substrate is heated has a higher coercive force and squareness ratio than those of a medium without Ti interlayer, and its dynamic characteristics as a magnetic recording disk are improved.

Another preferred embodiment of the present invention will be described below with reference to Fig. 5.

Fig. 5 is an enlarged sectional view showing a structure of a magnetic recording medium in which the CoNiCr recording film 48 in the embodiment shown in Fig. 1 is divided into two parts and a recording film interlayer is formed therebetween. That is, a magnetic recording medium 52 has a structure in which a Ti interlayer 44 is formed on a glass substrate 42, and a Cr undercoating film 46, a first CoNiCr recording film 54, a recording film Cr interlayer 56, a second CoNiCr recording film 58 and a carbon protective film 50 are sequentially formed on the Ti interlayer 44.

The magnetic recording medium 52 having the above structure can be produced with the same procedures as in the first embodiment by using an apparatus obtained by additionally providing a sputtering stage having a Cr target and a sputtering stage having a CoNiCr target between the third sputtering stage 76 and the fourth sputtering stage 78 of the in-line sputtering apparatus shown in Fig. 2.

Static magnetic characteristics of Examples D to K of the magnetic recording medium 52 obtained by the above producing process are summarized in Table 5. The Examples D to K are formed by changing the film thickness of the Cr undercoating film 46. On the measurement of static magnetic characteristics, a magnetic field is applied perpendicular to a disk conveyance direction during film formation ($\perp$).

Table 5

| Example | Coercive Force (Oe) | Residual Magnetization (Gμm) | Squareness Ratio (s) | Film Thickness (nm) | | | | |
|---|---|---|---|---|---|---|---|---|
| | | | | CoNiCr | Cr | CoNiCr | Cr | Ti |
| D | 1870 | 420 | 0.86 | 30 | 12.5 | 30 | 350 | 50 |
| E | 1880 | 455 | 0.85 | 30 | 12.5 | 30 | 350 | 50 |
| F | 1800 | 445 | 0.86 | 30 | 12.5 | 30 | 230 | 50 |
| G | 1750 | 430 | 0.88 | 30 | 12.5 | 30 | 175 | 50 |
| H | 1730 | 445 | 0.87 | 30 | 12.5 | 30 | 175 | 50 |
| I | 1520 | 455 | 0.87 | 30 | 12.5 | 30 | 118 | 50 |
| J | 1490 | 480 | 0.88 | 30 | 12.5 | 30 | 118 | 50 |
| K | 1330 | 405 | 0.87 | 30 | 12.5 | 30 | 75 | 50 |

As is apparent from Table 5, in each of the Examples D to K, as the thickness of the Cr undercoating film 46 is increased, a coercive force of the magnetic recording medium is increased. The Example K has substantially the same coercive force as that of the conventional product B' described above although its Cr undercoating film is thinner than that of the conventional product B'. In the Examples A to K, the Examples D and E have the highest coercive forces.

9

Dynamic characteristics of an Example L of the magnetic recording medium 52 having the same structure as shown in Fig. 5 are summarized together with film thicknesses in Table 6 below. Dynamic characteristicS of a conventional product D' are also shown for comparison.

Table 6

| | High-Frequency Output (μV) | Reso-lution (%) | Overwrite Charac-teristics (dB) | S/N Ratio (dB) | Film Thickness (nm) | | | | |
| --- | --- | --- | --- | --- | --- | --- | --- | --- | --- |
| | | | | | CoNiCr | Cr | CoNiCr | Cr | Ti |
| Conventional Product D' | 390 | 80 | 34 | 33.2 | - | - | 60 | 300 | - |
| Example L | 390 | 84 | 32.5 | 34.4 | 30 | 12.5 | 30 | 94.5 | 50 |

As is apparent from Table 6, in the Example L, better dynamic characteristics than those of the conventional product can be obtained even when the thickness of the Cr undercoating film 46 is reduced to be much smaller than that of the conventional product. The structure of the magnetic recording medium shown in Fig. 5 may be modified such that two or more recording films are formed and recording film interlayers are formed between the respective recording films.

In the present invention, the interlayer formed between the glass substrate and the Cr undercoating film is preferably consisted of Ti as in the above embodiments. The interlayer, however, may consist of a metal such as Mo, W, Zr, Y, Mn or Si, an alloy containing base metal consisting of these metals such as Zr alloy containing 13 to 20 atom% Al and an oxide or nitride such as $SiO_2$, $Al_2O_3$, TiN or AlN. On the selection of the material of the interlayer, the following points should be taken into consideration: the material has a thermal expansion coefficient close that of the glass substrate and/or the undercoating film, does not deteriorate the crystallinity of the Cr undercoating film, and is non-magnetic or feeble magnetic.

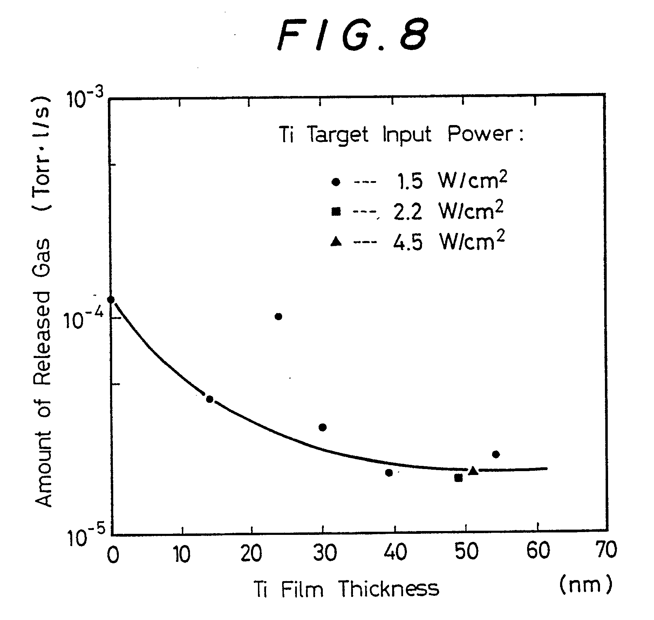

An effect of the film thickness of a Ti interlayer formed on a glass substrate will be described below with reference to Figs. 8 to 11.

Fig. 8 is a graph obtained by measuring an amount of a gas released in a vacuum chamber upon substrate heating when a Ti interlayer is formed on a glass substrate at room temperature and then heated in the vacuum chamber. As is apparent from the measurement results in Fig. 8, as the Ti film thickness is increased, an amount of gas released from the substrate and a carrier which supports the substrate is reduced. The amount of gas released is significantly reduced when the Ti film thickness is 15 nm or more and substantially at the constant level when the Ti film thickness is 30 nm or more.

In the measurement concerning Fig. 8, a conveyance speed of the carrier in the vacuum chamber was 150 mm/min, a substrate temperature in the substrate heating section was 410°C, and a surface area of the glass substrate was about 0.22.m². In addition, the Ti interlayer was formed on both the surfaces of the glass substrate.

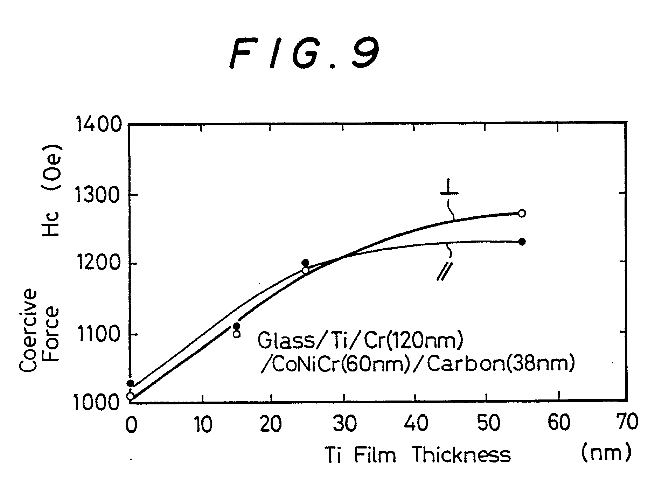

Fig. 9 is a graph showing a relationship between the thickness of a Ti interlayer formed on a glass substrate and a coercive force $H_C$. A film arrangement is the same as that shown in Fig. 1, i.e., glass substrate/Ti interlayer/120 nm thick Cr undercoating film/60 nm thick CoNiCr film/38 nm thick carbon protective film. After the Ti interlayer was formed at room temperature, substrate heating was performed to form the respective films to obtain the above film arrangement.

As is apparent from Fig. 9, as the Ti film thickness is increased, the coercive force $H_C$ is increased. When the Ti film thickness is 30 nm or more, the coercive force $H_C$ tends to saturate. Therefore, in view of magnetic performance, the Ti film thickness needs 30 nm or more.

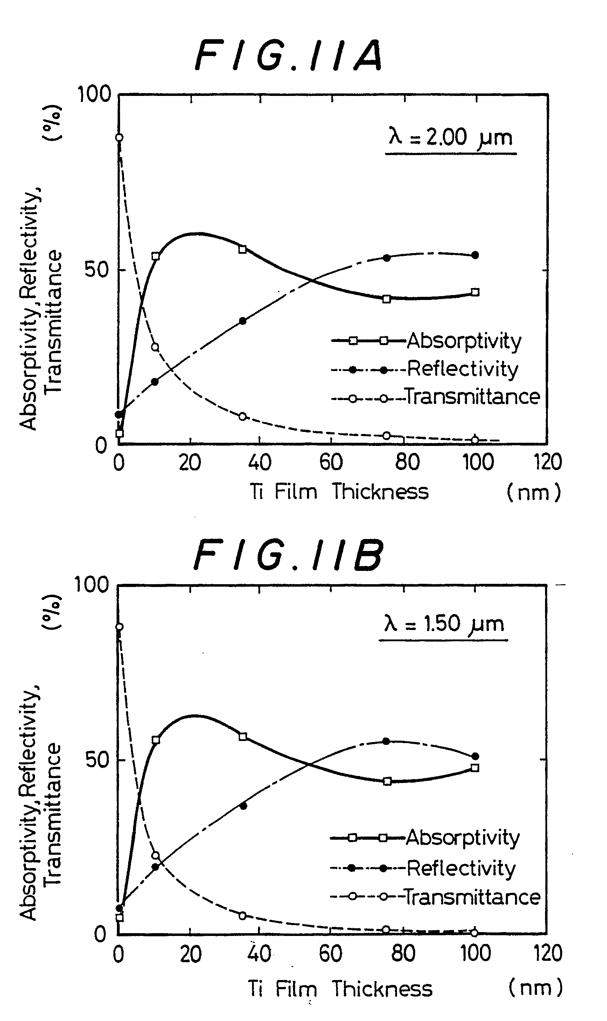

Figs. 11A and 11B are graphs showing reflectivity, absorptivity and transmittance obtained when infrared rays are radiated on a glass substrate having Ti interlayers on its both surfaces. Fig. 11A shows the results obtained by infrared rays having a wavelength $\lambda$ = 1.5 $\mu$m, and Fig. 11B shows the results obtained by infrared rays having a wavelength $\lambda$ = 2.0 $\mu$m.

When a glass substrate without Ti interlayer is heated by an infrared heater, the transmittance T of the substrate is high, and its reflectivity R is low. Therefore, the absorptivity [A = 100 - T - R (%)] of the substrate is low. If, however, a Ti interlayer having a thickness of 10 nm or more is formed on a glass substrate, the transmittance T of the substrate is abruptly decreased and its reflectivity R is gradually increased. As a result, the absorptivity A is abruptly increased as compared with the substrate not having Ti interlayer. If the Ti film thickness is 20 nm or more, the absorptivity A is decreased. This means that absorption of infrared rays is decreased because the reflectivity R is increased. That is, when the Ti film thickness is 50 nm or more, it is difficult to heat the substrate. When the Ti film thickness is 10 nm or less, it is difficult to heat the substrate since the transmittance T is high.

A temperature for heating substrate is an important parameter in cr and coNicr film formation and must be high in order to form a recording film having a high coercive force.

For this reason, the ease in heating of substrate is an important factor in a magnetic recording medium producing process. In view of heating of substrate, the Ti film thickness need only be 10 nm or more, and more preferably, 10 to 50 nm in order to obtain a temperature for heating substrate as high as possible.

A Ti interlayer having a Ti film thickness of 30 to 50 nm is optimal, in view of the three points described above, i.e., the effect of entrapping a gas released from a substrate, the magnetic characteristics, and the heat absorption of a substrate (i.e., the ease in heating of substrate).

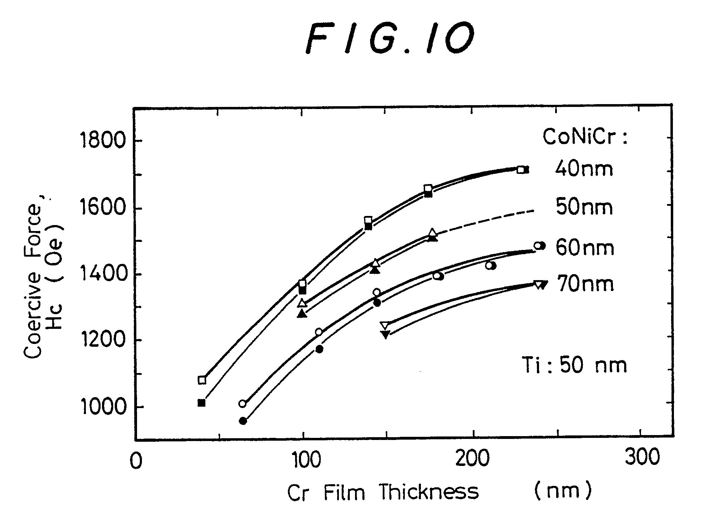

According to the magnetic recording medium having the Ti interlayer with the optimum thickness established as mentioned above, the high coercive force can be easily obtained in the magnetic recording medium with the respective thickness ranges of the Cr undercoating film and the CoNiCr recording film, as shown in Fig. 10. As is apparent from Fig. 10, the magnetic recording medium having coercive force of 1000 to 1700 Oe is easily produced with the Cr undercoating film having thickness of 50 to 250 nm, 40 nm thick CoNiCr recording film and 50 nm thick Ti interlayer.

As shown in Fig. 10, the CoNiCr recording film having thickness of 40 to 70 nm and the Cr undercoating film having thickness of 50 to 250 nm in combination are effective in the magnetic recording medium, when the thickness of the Ti interlayer is optimum as mentioned above.

Another magnetic material such as CoCrTa and CoPt may be substituted for the CoNiCr recording layer, provided that the recording film consisting of the magnetic material such as CoCrTa and CoPt has so thickness as to obtain a residual magnetization which corresponds to the residual magnetization obtained by the magnetic recording medium consisting of the CoNiCr recording film having the thickness of 40 to 70 nm. That is, the thickness of 40 to 70 nm for the CoNiCr recording film corresponds to the residual magnetization of 300 to 525 G$\mu$m, the thickness of the CoNiCr recording film being converted into said residual magnetization. Therefore, the thickness of the recording film consisting of another magnetic material should be determined so as to obtain said residual magnetization range.

The interlayer consisting of another materials described above will show the same effect mentioned above with a thickness of 30 to 50 nm.

As has been described above, according to the present invention, the Cr undercoating film free from oxidization can be obtained, since an interlayer having a film thickness of 15 to 100 nm and capable of entrapping a gas released from a glass substrate is formed between the glass substrate and the Cr undercoating film. Therefore, the magnetic recording medium can be obtained which has a higher coercive force and squareness ratio than those of a conventional magnetic recording medium not having an interlayer and dynamic characteristics as a magnetic disk can be improved.

In addition, according to the present invention, only a thin undercoating film is required to obtain a desired coercive force,since oxidization does not occur much even in an initial film formation stage of a Cr undercoating film. Note that substantially the same coercive force as that of a medium having no interlayer can be obtained with a Cr film thickness which is about half that of the medium having no interlayer.

## Claims

1. A magnetic recording medium in which a Cr undercoating film, a recording film and a protective film are laminated on a glass substrate, characterized by comprising an interlayer having a thickness of 15 to 100 nm being formed between said glass substrate and said Cr undercoating film.

2. A magnetic recording medium in accordance with claim 1, characterized in that said interlayer consists of a metal selected from the group consisting of Ti, Mo, W, Zr,Y ,Mn , and Si, or an alloy containing a base metal selected from said group.

3. A magnetic recording medium in accordance with claim 1, characterized in that a material of said interlayer is Ti.

4. A magnetic recording medium in accordance with claims 1 to 3, characterized in that the thickness of said interlayer is about 30 nm to about 50 nm.

5. A magnetic recording medium in accordance with claims 1 to 4, characterized in that the thickness of said Cr undercoating film is about 50 nm to about 250 nm.

6. A magnetic recording medium in accordance with claims 1 to 5, characterized in that a thickness of said recording film is determined so as to obtain a residual magnetization of 300 to 526 G$\mu$m in the magnetic recording medium.

7. A magentic recording medium in accordance with claims 1 to 6, characterized in that said recording film is divided into at least two layers, and a recording film interlayer is formed between the divided recording films.

8. A magnetic recording medium in accordance with claim 7, characterized in that a material of said recording film interlayer is Cr.

9. A process of producing a magnetic recording medium characterized by comprising the steps of:
   forming an interlayer capable of entrapping a gas released from a glass substrate on said glass substrate; and
   sequentially forming a Cr undercoating film, a recording film and a protective film.

10. A process in accordance with claim 9, characterized in that said interlayer is formed and therafter said glass substrate is heated to form said undercoating film.

11. A process in accordance with claims 9 and 10 characterized in that said interlayer is formed by sputtering using a Ti target.

# F I G. I

# F I G. 2

| 62 | 66 | 60 | | | | | 68 | 64 |
|---|---|---|---|---|---|---|---|---|
| L/C | ⨯ | Forming of Ti | Heating | Forming of Cr | Forming of CoNiCr | Forming of Carbon | ⨯ | UL/C |
| | | 70 | 72 | 74 | 76 | 78 | | |

Introducing Substrate

Taking out Substrate

# F I G. 4

| 62 | 66 | 60 | | | | | 68 | 64 |
|---|---|---|---|---|---|---|---|---|
| L/C | ⨯ | Heating | Forming of Ti | Forming of Cr | Forming of CoNiCr | Forming of Carbon | ⨯ | UL/C |
| | | 72 | 70 | 74 | 76 | 78 | | |

Introducing Substrate

Taking out Substrate

14

# FIG. 3

# FIG. 5

# FIG. 6

# FIG. 7

# F I G . 8

# F I G . 9

Glass/Ti/Cr(120nm)
/CoNiCr(60nm)/Carbon(38nm)

# F I G. IO

# F I G. I I A

# F I G. I I B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 828 905 (T. WADA et al.) * column 3, lines 17-31; column 7, lines 42-53; figure 1 * | 1-5,8,9 ,11 | G 11 B 5/704<br>G 11 B 5/64 |
| A | PATENT ABSTRACTS OF JAPAN vol. 12, no. 441 (P-789)(3288), 21 November 1988; & JP-A-168827 (ALPS ELECTRIC CO. LTD.) 12.07.1988 * the whole document * | 7,8 | |

TECHNICAL FIELDS
SEARCHED (Int. Cl.5)

G 11 B

The present search report has been drawn up for all claims

| Place of search | Date of completion of the search | Examiner |
|---|---|---|
| BERLIN | 12-07-1990 | GERARD E.A.S. |

EPO FORM 1503 03.82 (P0401)